# EUROPEAN PATENT APPLICATION

(11) **EP 4 589 526 A1**
(43) Date of publication of application: **23.07.2025**
(21) Application number: 24223503.4
(22) Date of filing: 27.12.2024
(51) Int. Cl.: G06T 7/00, G01N 21/89

(54) **METHOD FOR PROCESSING DIGITAL IMAGES OF A FABRIC IN OUTPUT FROM A TEXTILE MACHINE**

(30) Priority: 19.01.2024 IT 202400000924
(71) Applicant: L.G.L. Electronics S.p.A., 24024 Gandino (Bergamo) (IT)
(72) Inventor: PEDRINI, Giovanni, 24026 LEFFE BG (IT); ZENONI, Enrico, 24050 ZANICA BG (IT)
(74) Representative: Modiano, Micaela Nadia

(57) **Abstract**

A method for processing digital images of a fabric in output from a textile machine, comprising the step of sequentially acquiring digital images of an area (A) through which a fabric (F) transits by virtue of digital video acquisition means (12, 14, 16). In each acquired digital image, each one of the yarns (Y1-Y7) that form the fabric (F) in the area (A) is located and classified by virtue of processing means (18) based on a neural network. In each one of the located and classified yarns (Y1-Y7), at least one geometric characteristic correlated to a significant parameter of interest of the fabric is obtained. After this, information related to the significant parameter of interest is obtained on the basis of the trend of the geometric characteristic in the sequence of acquired digital images.

## Description

The present invention relates to a method for processing digital images of a fabric in output from a textile machine.

The invention can be applied particularly advantageously, although not exclusively, to knitted fabrics produced on circular knitting machines.

As is known, automated systems for visually inspecting fabrics have been the focus of research for many years and they are evolving very rapidly by virtue of recent developments in the field of artificial intelligence and computerized vision techniques based on neural networks.

The above notwithstanding, automated assessment of the properties of fabrics and the detection of any defects is still a demanding task since some visual characteristics, such as uniformity of the yarn or the surface conditions of the fabric, are qualitative aspects of the end product that are difficult to inspect.

As is known, any defects that are not detected can have, unfortunately, an acute impact on entire production batches.

In the known solutions applied to circular knitting machines, the fabric slides with a continuous rotary movement in front of a digital camera positioned so as to inspect the front face ("technical front") or the rear face ("technical back") of the fabric in an area close to the forming point of that fabric. In some cases, there can be two mutually opposite cameras for inspecting both faces of the fabric.

The images captured by the camera can be processed by a computer programmed with an image analysis algorithm that makes use of one or more neural networks.

In the known solutions applied to circular knitting machines, the neural networks used have benefited from developments made in the field of artificial intelligence and in particular of artificial, i.e. computer, vision. Over the years the architectures of the neural networks used have become increasingly complex and high-performing, and the evolutionary trend is still continually growing.

In the most common conventional systems, the neural network is designed and trained to recognize a preset number of defects, such as double lines, holes, sunken points, oil stains, missing Lycra, and the like, on the basis of visual characteristics and specific geometric shapes. The conventional systems are also capable of identifying the approximate position of the defect, framing it in a bounding box within the image.

According to the neural network architecture used, the position of the defect within the image can also be identified in detail (at the pixel level) by means of image segmentation techniques that are per se known, in particular semantic segmentation techniques. An example of a neural network that is typically used for implementing the semantic segmentation technique is U-Net.

As is known, in semantic segmentation techniques, every pixel of a digital image is classified with a label and the portions of an image that contain pixels that are similar to each other are identified with "segmentation masks", typically with different colors (a different color for each type of mask).

In addition to directly identifying defects, semantic segmentation techniques have sometimes been used for analyzing the structure of fabrics as well, in particular of fabrics produced with weaving frames, in order to distinguish the weft yarns from the warp yarns. In this case, therefore, the neural network is capable, with segmentation masks, of distinguishing two different families within the image.

As is known to the person skilled in the art, the latter solution, although advantageous, has limitations in that the algorithm (neural network) used for semantic segmentation can at most distinguish between two different families within the image (e.g., weft and warp) and speculate on the presence of an irregularity in the fabric on the basis of a distribution of the two families other than the distribution it would expect to find in an intact fabric.

It would in fact be desirable to obtain more detailed data, both for the exact recognition of any irregularity or defect, and for the real-time control of the textile process.

Therefore, the aim of the present invention is to provide a method for processing digital images of a fabric in output from a textile machine that overcomes the limitations of conventional systems, in particular by providing more detailed data that are useful both for the exact recognition of any irregularity or defect, and for the real-time control of the textile process.

The above aim and other objects, which will become clearer from the description that follows, are achieved by a method having the characteristics recited in the appended claim 1, while the appended dependent claims define other characteristics of the invention which are advantageous, although secondary.

Now the invention will be described in greater detail, with reference to a preferred but not exclusive embodiment thereof, which is illustrated for the purposes of non-limiting example in the accompanying drawings, wherein:
- Figure 1 is a schematic view of an apparatus for carrying out the method according to the invention in association with a circular knitting machine;
- Figures 2A, 2B and 2C show a portion of fabric filmed during execution of the method according to the invention, in three different steps of operation;
- Figure 3 is a schematic view of a yarn feeding apparatus using the method according to the invention for controlling the feeding process;
- Figures 4A, 4B and 4C show a portion of fabric filmed during execution of the method according to a different embodiment of the invention, in three different steps of operation;
- Figure 5 shows a portion of fabric, enlarged with respect to Figures 4A, 4B and 4C;
- Figure 6 shows a first type of fabric to which the method according to the invention can be applied;
- Figure 7 shows a second type of fabric to which the method according to the invention can be applied;
- Figure 8 is a schematic view of an alternative embodiment of the method according to the invention.

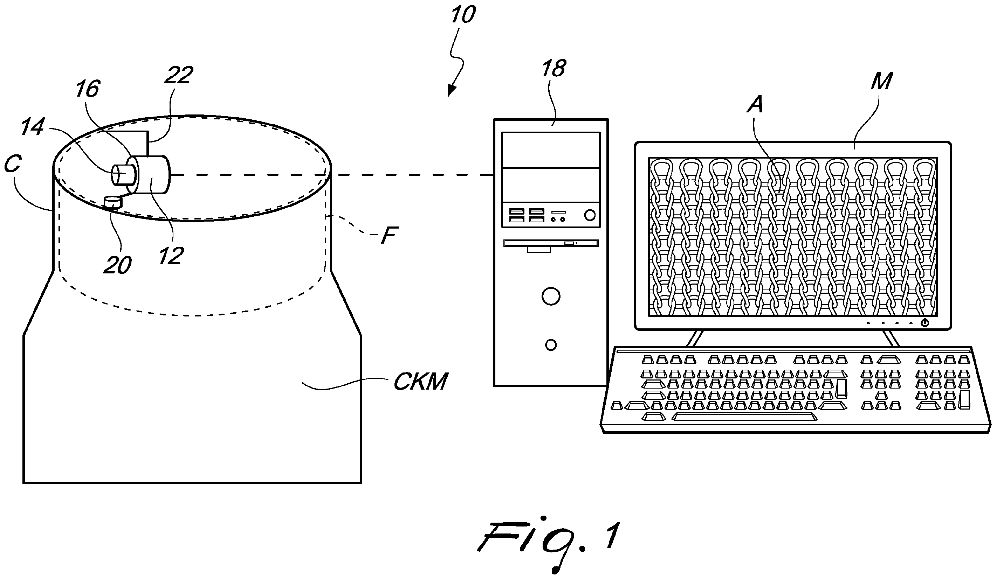

With reference to Figure 1, an automated apparatus 10 for visually inspecting fabrics, in a per se known manner, comprises digital video acquisition means which, in this embodiment, comprise a digital camera 12 equipped with a lens 14 and with lighting means 16, and processing means 18.

In a conventional manner, the digital camera 12 can be provided with CCD or CMOS sensors and be either of the type that operates in area scanning mode (a frame camera) or of the type that operates in linear scanning mode (a line scan camera). The digital camera 12 can also advantageously be provided with infrared sensors (IR) capable of operating in the infrared frequency range, or with RGB-IR sensors capable of recording both visible light and infrared light.

The lighting means 16 can be of the type typically used in solutions applied to circular knitting machines and which include Light Emitting Diodes (LEDs). As is known, LEDs are low power, economic and suitable for the acquisition of images at high frame rates, as in the applications under discussion here.

As the person skilled in the art will easily grasp, if digital cameras that operate in the infrared spectrum are used, then the lighting means with a suitable infrared light source will also need to be selected.

Furthermore, the camera can be installed inside a protective shell (not shown), together with the lens and the lighting system. The camera can also be provided with per se known means (not shown) for cleaning the lenses of the lens assembly (or its protective glass), e.g., by way of compressed air.

In this embodiment, the digital camera 12 is accommodated inside the cylinder C of a circular knitting machine CKM in a stationary position, so as to frame an area A (which, in Figure 1, is shown on a screen M associated with the processing means 18) of the rear face (technical back) of the fabric F proximate to a forming point (not shown in Figure 1) of that fabric. In a conventional manner, the fabric F advances from the forming point with a spiral motion about the axis of the cylinder C, so as to form a tube of knitting that slides in front of the digital camera 12 with a substantially horizontal continuous rotary motion and a speed equal to the rotation speed of the circular knitting machine CKM.

In a conventional manner, the tube of knitting is collected by a take-up roller (not shown in Figure 1) which rotates at the base of the circular knitting machine CKM about a horizontal axis.

The digital camera 12 is of known type and is capable of acquiring digital images in sequence, with a relatively high frame rate, of the area A in which the fabric transits. As known, the high frame rate makes it possible to prevent distortion of the images and loss of information.

In a known manner, the acquisition of the digital images by the digital camera 12 and the rotation of the circular knitting machine CKM are synchronized, e.g., by means of hardware synchronization means, such as an encoder 20, or software synchronization means, such as a digital signal exchanged through the API (Application Programming Interface) of the digital camera 12.

In this embodiment, the digital camera 12 is anchored to the structure of the circular knitting machine CKM by way of supporting means 22. Advantageously, and in a per se known manner, the supporting means 22 are configured to allow adjustment both of the position of the digital camera 12 along the three Cartesian axes, and of its inclination, rotation and vergence.

Advantageously, the supporting means 22 can be provided with mechanical and/or electronic measurement systems that allow precision monitoring of the distance of the digital camera from the fabric to be inspected, for the purposes of precise calibration of the digital camera.

In a known way, e.g., from the scientific article "Detection of defects in polyurethane fabrics based on computer vision techniques" (2015), the recognition of defects in fabrics requires a process of calibration of the digital camera that is capable of establishing a relationship between measurements made by the camera (in pixels) and real-world dimensions.

As is likewise known, e.g., from the scientific article "Line scan camera calibration for fabric imaging" (2012), calibration of the digital camera is a necessary step in order to obtain the relationship between the coordinates of a three-dimensional object and the coordinates of the image. This relationship is determined during the calibration procedure for the digital camera, by obtaining the calibration parameters, both internal and external. The internal calibration parameters include the basic intrinsic array (intrinsic calibration) of the digital camera, which influences the manner in which the sensor samples the scene. The external parameters indicate the position and orientation of the sensor with respect to the global system of coordinates (extrinsic calibration).

Over the years several different methods of calibration of cameras have been developed. The "Zhang method", for example, is one of the methods most commonly used, although there are other methods that can be selected for this application.

The topic of digital camera calibration will not be discussed further in that it lies outside the scope of the present invention and, as mentioned above, it forms part of the common knowledge of the person skilled in the art.

The digital images captured by the digital camera 12 are processed by the processing means 18, which are programmed with an image analysis algorithm that makes use of a neural network.

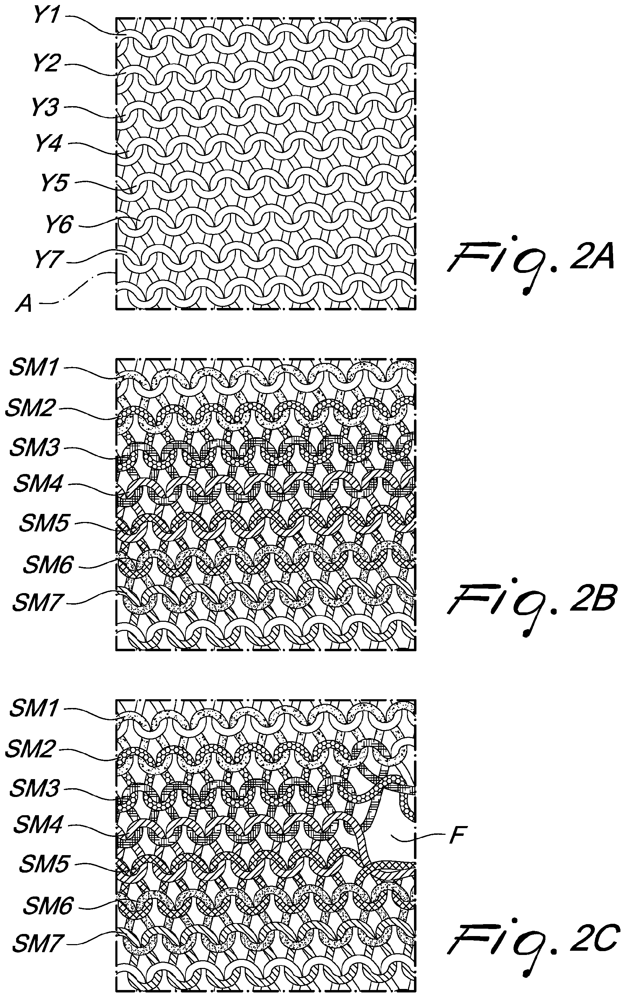

With reference now also to Figures 2A, 2B and 2C, the method according to the invention entails, in each acquired digital image:
- identifying at least one of the yarns Y1-Y7 (Figure 2A) forming the fabric F in the area A by virtue of processing means 18 based on at least one neural network, and
- on each one of the identified yarns Y1-Y7, obtaining at least one geometric characteristic correlated to a significant parameter of interest of the fabric F;
and obtaining information related to the significant parameter of interest on the basis of the trend of the geometric characteristic in the sequence of acquired digital images.

In the present description, the term "identify" or "identifying" referring to one or more yarns comprises the steps of locating and classifying these yarn(s) within the acquired digital image.

Advantageously, the step of locating and classifying at least one of the yarns Y1-Y7 forming the fabric F in the area A is obtained as a direct output of the neural network.

Preferably, all the yarns Y1-Y7 are identified for which the transverse footprint, with respect to the direction in which the fabric slides (the horizontal direction in Figures 2A, 2B, 2C), is completely contained within the acquired digital image.

In a first embodiment, the yarns Y1-Y7 are identified using the instance segmentation technique, which is per se known. As known, in instance segmentation techniques, the pixels of each instance (i.e. "yarn" in this application) of a digital image are classified with a different label, so making it possible to distinguish between different instances within the same digital image.

An example of a known neural network that can be used to implement the instance segmentation technique is Mask R-CNN.

In this description, possible architectures of the neural networks will not be described in detail, as they lie outside the scope of the present invention and are part of the common general knowledge of the person skilled in the art.

With reference now to Figures 2B and 2C, the neural network generates a different segmentation mask SM1-SM7 for each one of the yarns Y1-Y7 located within the area A. In a per se known manner, a segmentation mask consists of a digital image with the same dimensions as the starting digital image, but composed of regions of solid color that define the individual profiles of the instances (i.e. yarns) detected, at least for the part visible to the digital camera 12. In Figures 2B and 2C, the regions that belong to different instances are shown with different hatching styles.

Preferably, the position of each one of the located and classified yarns is plotted using an object tracking technique which, in a per se known manner, makes it possible to identify and predict any changes in the position of the yarns in the sequence of images.

In this first embodiment, the significant parameter of interest is fabric integrity.

In this case, the geometric characteristic can advantageously be the area and/or the perimeter and/or the ratio between the area and the perimeter, advantageously in pixels, of each generated segmentation mask SM1-SM7, which represents a respective yarn in the digital image.

The area can be calculated as the sum of the pixels identified within the segmentation masks. The perimeter can be calculated based on the positions of all the pixels that define the outlines of the segmentation masks.

Once the digital camera 12 is calibrated, obviously it will be possible to derive measurements in the decimal metric system starting from the measurements in pixel units.

As illustrated in Figures 2B and 2C, which respectively show a portion of fabric with no defects and a portion of fabric with a defect F, any variations in the area and/or in the perimeter and/or in the ratio between these two geometric characteristics, e.g., with respect to a nominal value or between successive digital images, correlate with the presence of the defect F. As a consequence, in the presence of such variations, the information obtained is that a defect is present. This information can be used to trigger an alarm.

Obviously, it is preferable to establish a tolerance interval within which such variations are to be considered acceptable, in that they are attributable to intrinsic irregularities of the material under inspection (the yarn).

In a second embodiment, in which the yarns Y1-Y7 are again located using the instance segmentation technique, the significant parameter of interest is the yarn consumption.

In this case as well, the geometric characteristic can advantageously be the area and/or the perimeter and/or the ratio between the area and the perimeter, advantageously in pixels, of each segmentation mask generated.

Any variations in the area and/or in the perimeter and/or in the ratio between these two geometric characteristics, e.g., with respect to a nominal value or between successive digital images, will act as indications of variations in yarn consumption. As a consequence, in the presence of such variations, the information obtained is the trend (in terms of increase, decrease, or constancy) of yarn consumption during the textile process.

In a third embodiment, in which the yarns Y1-Y7 are again located using the instance segmentation technique, the significant parameter of interest is the yarn tension.

In this case as well, the geometric characteristic to be considered can be the area and/or the perimeter, but more advantageously what is used is the ratio between the area and the perimeter, measured in pixels, of each segmentation mask.

Any variations in the above-mentioned ratio, e.g., with respect to a nominal value or between successive digital images, will act as indications of variations in yarn tension. In particular, a reduction of the ratio between area and perimeter of a segmentation mask is indicative of an increase in the tension of the respective yarn, as a result of clamping. By contrast, an increase of the ratio between area and perimeter of a segmentation mask is indicative of a reduction in the tension of the respective yarn.

As a consequence, in the presence of such variations, the information obtained is the trend (in terms of increase, decrease, or constancy) of yarn tension during the textile process.

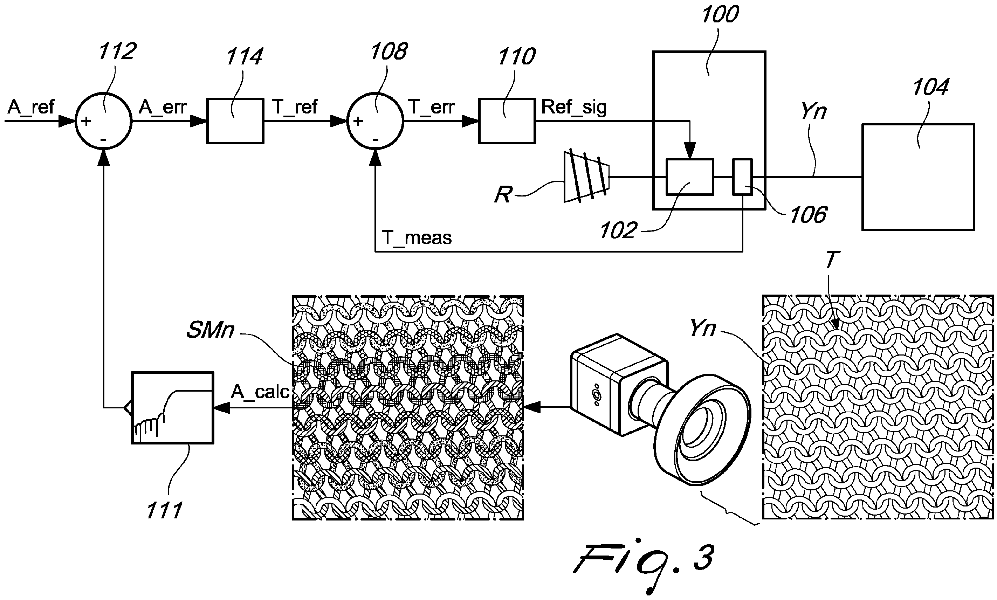

As illustrated schematically in Figure 3, the information relating to the trend of yarn tension can be advantageously used to control, in feedback, the tension applied to the nth yarn Yn that is part of the fabric F in the area monitored, during a textile process. In this regard, with reference to Figure 3, a generic yarn feeder 100 receives the nth yarn Yn from a spool R. The yarn feeder 100 is provided with means for controlling the tension 102 which are configured to modify the tension with which the nth yarn Yn is transferred to a textile machine 104, and with tension sensor means 106 which are configured to measure the tension of the nth yarn Yn downstream of the means for controlling the tension 102.

If positive yarn feeders are used, in which the yarn is wound on a motorized spool (not shown) which actively transfers it to the textile machine, the means for controlling the tension 102 are configured to vary the rotation speed of the spool.

If accumulator yarn feeders are used, in which the yarn is unwound from a drum (not shown) which releases it passively on demand to the textile machine, the means for controlling the tension 102 are configured to brake the yarn in output from the drum.

Independently of the type of yarn feeder, in a per se known manner, the tension of the nth yarn Yn is controlled in a closed loop by comparing the measured tension signal T meas generated by the tension sensor means 106 with a reference tension T_ref in a first subtracter node 108, so as to obtain a tension error signal T_err. The tension error signal T_err is sent to a first PID (Proportional Integral Derivative) controller 110 which produces, in output, a reference signal Ref_sig for the means for controlling the tension 102.

The area of the segmentation mask SMn relating to the nth yarn Yn, calculated using the method according to the invention, or calculated area A _calc, preferably after passing through a filter 111, is compared in a second subtracter node 112 with a reference area A_ref, so as to obtain an area error signal A_err. The area error signal A_err is sent to a second PID controller 114 which produces, in output, the reference tension T _ref.

As an alternative to area, as the person skilled in the art will readily understand, it is possible to use the perimeter of the segmentation mask or the ratio between the area and the perimeter of the segmentation mask.

In a fourth embodiment, in which the yarns Y1-Y7 are again located using the instance segmentation technique, the significant parameter of interest is the row length.

As is known, the row length is equivalent to the length of a yarn obtained by unreeling the loops that are formed in one complete turn of the knitting machine. Measurement of the row length is fundamentally important, both to meet quality requirements and to save on production costs.

In this case, the geometric characteristic can advantageously be the area and/or the perimeter and/or the ratio between the area and the perimeter, measured in pixels, of each segmentation mask.

Any variations in the area and/or in the perimeter and/or in the ratio between the area and the perimeter, e.g., with respect to a nominal value or between successive digital images, will act as indications of variations in row length.

In particular, the perimeter can be used to estimate the row length, since half of the total perimeter of each mask can be considered a good approximation of the path of the thread within the image.

As a consequence, in the presence of such variations, the information obtained is the trend (in terms of increase, decrease or constancy) of the row length during the textile process.

To keep the row length at a substantially constant preset value, generally positive yarn feeders are used which are associated with, or integrated in, circular knitting machines. When the speed of the knitting machine increases, the speed of the positive yarn feeders also increases, so that the ratio between the quantity of yarn and the number of needles remains constant (i.e., constant row length).

Therefore, precise information about the trend of row length can be advantageously used to optimize yarn consumption in the textile process.

The real-time estimate of the row length can also be used as a feedback control signal in closed-loop control of the yarn tension, similarly to what is described previously and shown in Figure 3, in place of the area and/or of the perimeter of the segmentation mask.

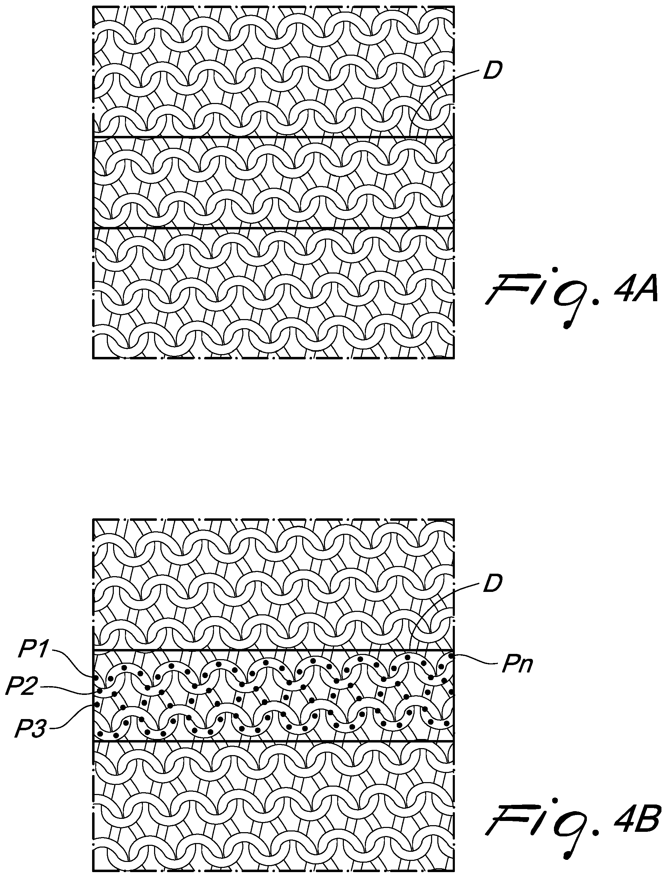

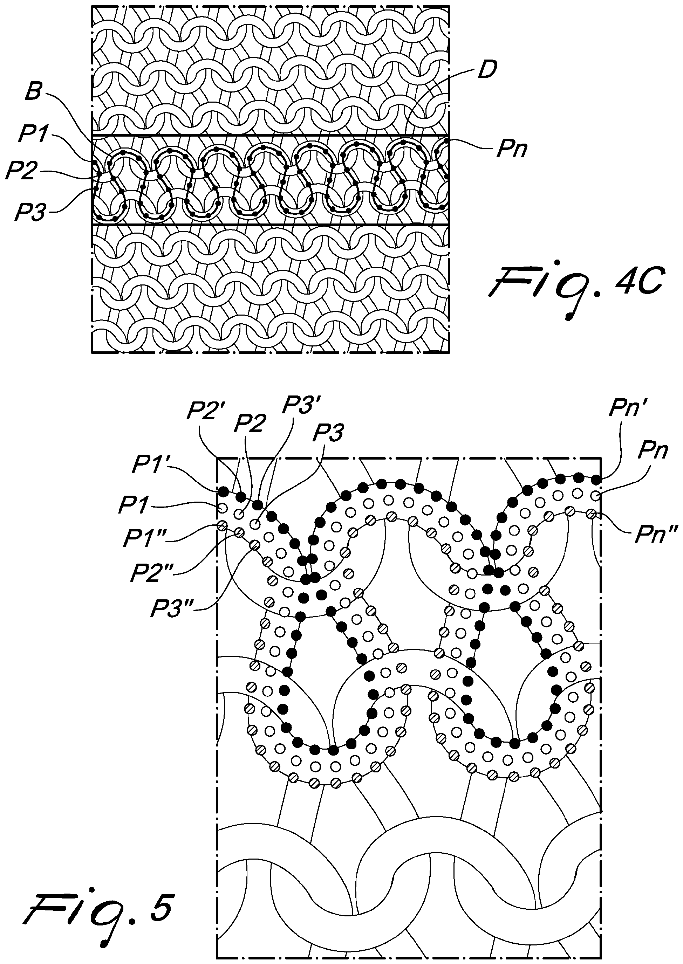

In a fifth embodiment, shown in Figures 4A, 4B, 4C and 5, the significant parameter of interest is again the row length.

In this fifth embodiment, the geometric characteristic to be obtained is the path B (Figure 4C) of the yarn, which is determined based on the position of a set of key points P1, P2, P3, ..., Pn which are identified preferably by a first neural network, which is designed and trained for this purpose, within a respective bounding box D, which is generated preferably by a second neural network in turn designed and trained for this purpose, which limits the footprint of the respective yarn within the acquired digital image.

Obviously, it will be possible to use a single neural network, especially designed and trained to achieve both goals.

The path B of the yarn can be obtained in turn using a neural network or by using interpolation known methods (linear, polynomial, splines etc.), with the row length being calculated using the equation resulting from the interpolation algorithm, for example, if linear interpolation is used, it can be calculated as the sum of the distances between the key points identified as P1, P2, P3, ..., Pn.

It is to be noted that, as illustrated in Figure 5, the key points can be located along the central axis of the yarn P1, P2, P3, ..., Pn (empty dots), on the upper edge of the yarn silhouette P1', P2', P3', ..., Pn' (solid dots), on the lower edge of the silhouette of the yarn P1", P2", P3", ..., Pn" (cross-hatched dots), or in any other point comprised between the upper edge and the lower edge of the yarn silhouette.

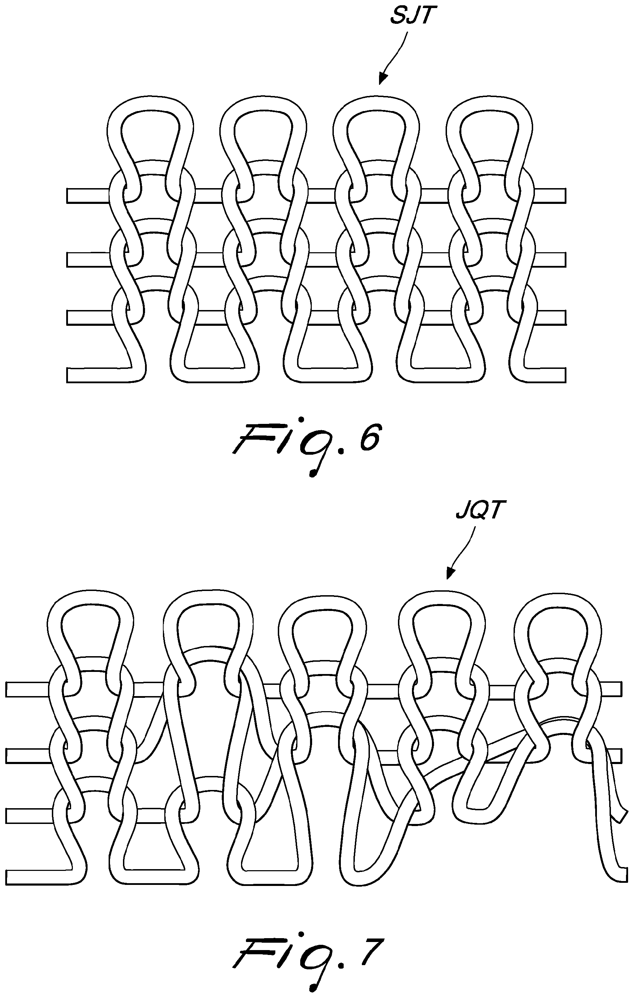

In the above embodiments, reference has been made to "single Jersey" fabrics, in which the consecutive loops formed between the yarns are all identical to each other, as illustrated in Figure 6, where a single Jersey SJT portion of fabric is illustrated. However, the method according to the invention can also be applied to fabrics with complex patterns, for example Jacquard fabrics in which the consecutive knots between the yarns vary their configuration with a periodic trend, as illustrated in Figure 7, which shows a Jacquard JQT portion of fabric containing the periodically-repeating pattern.

To apply the method according to the invention to complex patterns, a first possibility entails:
- configuring the parameters of the digital camera so that each digital image sent to the neural network covers an area of fabric containing exactly the pattern that repeats periodically, with the same configuration of yarns;
- synchronizing the acquisition of the digital images with the rotation speed of the textile machine so as to avoid gaps or overlaps between consecutive digital images.

A second possibility that is particularly indicated if the area of fabric containing the pattern that repeats periodically is too large to be captured in a single digital image, is based on the assumption that the values of the measurements (area and/or perimeter and/or ratio between area and perimeter and/or estimate of row length) performed on the digital images are always repeated with the same sequence at each portion of turn of the machine.

This second possibility entails:
- acquiring a sequence of digital images of a sample fabric that is referred to a portion of the textile machine's revolution and containing exactly the pattern that is repeated periodically;
- deriving a sequence of reference values from the sequence of digital images of the sample fabric;
- comparing the sequences of actual values measured on the sequence of digital images acquired during the textile process with the sequence of reference values measured on the sample fabric;
- identifying the desired information (presence of a defect, variation in tension etc.) on the basis of the difference detected, if any.

Obviously, for the comparison to be meaningful, the dimension of the acquired digital images on the sample fabric must be identical to the dimension of the digital images acquired during the textile process.

In this case too, the acquisition of the digital images needs to be synchronized with the rotation speed of the machine so as to avoid gaps or overlaps between consecutive digital images, both during the sampling step and during the textile process.

If it is not possible (or optimal) to ensure that a finished sequence of images covers exactly the pattern that repeats periodically, it is possible to apply the same method to different portions of knitted fabric. The maximum limit will be when a reference portion of fabric is reached that is equal to the complete (helical) circumference of the tube of knitting, or one complete turn of the machine.

In this case too, in fact, the measurements performed on the sample fabric, in the absence of variations in the significant parameter of interest, should coincide with the measurements performed during the textile process.

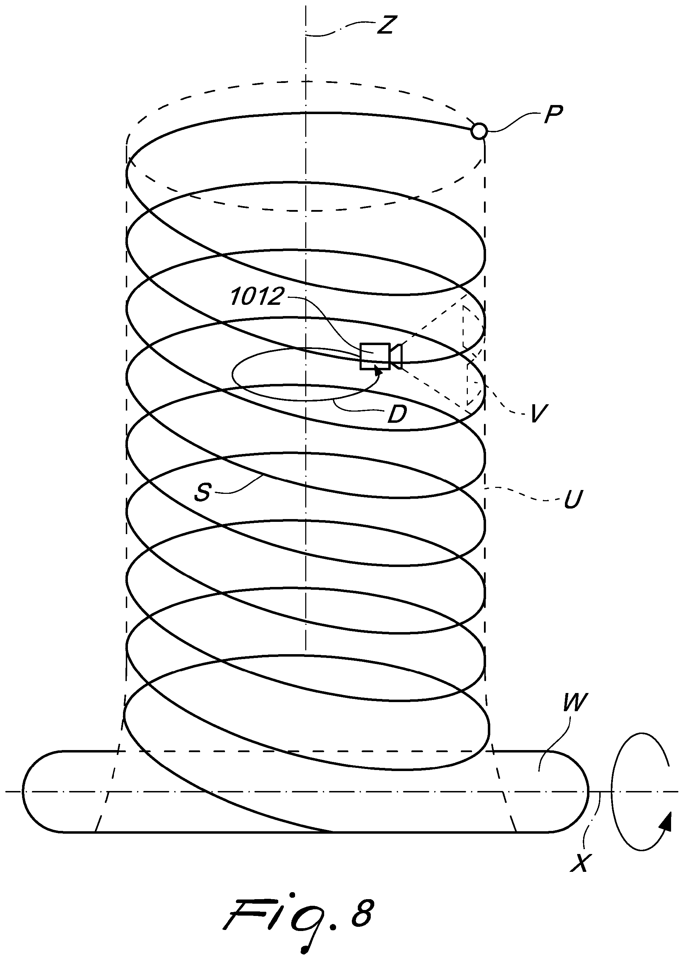

According to a further variation of the invention, in this case specifically with reference to circular knitting machines and illustrated schematically in Figure 8, the digital camera 1012, instead of being stationary, rotates horizontally about the axis Z of the cylinder, as indicated by the arrow D in Figure 8, synchronously with the machine. For example, the digital camera 1012 can be mechanically coupled to the rotating parts of the machine, or moved in mechanical axial alignment or in electric axial alignment, synchronized with the machine.

In this case, the digital camera 1012 acquires images of the fabric for only a limited portion of the circumference of the machine, corresponding to the horizontal aperture of the field of view V of the digital camera 1012.

However, by virtue of the helical movement (shown by the S in Figure 8) about the axis Z of the cylinder (not shown in Figure 8) with which the fabric pays out from the forming point P generating the tube of knitting U, in this case too the tube of knitting slides in front of the digital camera 1012, but with a continuous vertical (instead of substantially horizontal) straight motion downward from above and a speed equal to the speed of winding of the take-up roller W which, as mentioned previously, rotating about the horizontal axis X, gathers the fabric at the base of the tube of knitting U. In this case, therefore, all the yarns fed to the machine slide repeatedly in front of the digital camera 1012 in a continuous ordered sequence from the first yarn to the last.

In this case also, therefore, it is possible to identify all the yarns as they appear in sequence before the sensor of the digital camera 1012 in the monitored portion of tube of knitting U.

Since the sequence of yarns repeats continuously, in this case it is therefore advantageous:
- to configure the parameters of the digital camera so that each digital image sent to the neural network(s) covers an area of fabric containing exactly all the yarns fed to the machine (or a finished fraction of the total of the yarns);
- to synchronize the acquisition of the digital images with the take-up speed of the take-up roller W so as to avoid gaps or overlaps between consecutive digital images;
- where necessary (and preferably, if the previous steps are not applicable), track the position of all the yarns identified using object tracking techniques, so as to identify and predict the changes in position of the yarns in the sequence of acquired images.

For each complete turn of the machine, the measurements can be performed "by sampling" on each yarn with the same methods as described previously, solely for the portion of fabric seen by the digital camera 1012.

These measurements can also be used to adjust the reference tension in the yarn feeders, in a similar manner to what is described for the third embodiment illustrated in Figure 3.

To monitor the entire circumference of the tube of knitting U it would be necessary to use multiple aligned digital still cameras, one beside the next and supported by a structure that rotates inside the cylinder of the circular knitting machine.

In this case too, obviously, the still camera(s) could be positioned outside instead of inside the tube of knitting U, under the cylinder, so as to frame the technical front of the fabric, and they could be coupled to the rotating parts of the machine or moved in synchrony with the machine.

The design and training of the neural network(s) to execute the method according to the invention come under the normal knowledge of the person skilled in the art and therefore will not be discussed in more detail here.

Some preferred embodiments of the invention have been described, but obviously the person skilled in the art may make various modifications and variations within the scope of protection of the claims.

For example, in embodiments not described in detail, the positions of the key points and the measurements of the row length can also be used to identify defects in the fabric, for example by verifying that the key points are equally spaced apart within the image, and any major deviations between successive images can be used to trigger alarms.

In other embodiments, not described, the estimated row length measurements based on the position of the key points can be used for the real-time adjustment of critical parameters such as yarn tension, fabric take-up tension, sinker height, and textile machine rotation speed.

In particular, the estimated row length measurements based on the position of the key points can also be used to adjust the reference tension in the yarn feeders, in a similar manner to what is described for the third embodiment illustrated in Figure 3. The only difference is that, in the second subtracter node, instead of comparing the calculated area with a reference area, the estimated row length is compared with a reference row length, so as to obtain a row length error signal to send to the second PID controller in order to produce the reference tension in output.

Obviously, the yarns can be identified using neural networks with different architectures capable of using different segmentation techniques but still capable of obtaining results equivalent to the instance segmentation technique of the embodiments described herein, e.g., the per se known panoptic segmentation technique, which consists of a combination of the semantic segmentation and instance segmentation techniques.

The position of the digital video acquisition means can also be varied with respect to the embodiments described and explained herein. For example, the digital camera could be installed below the cylinder, outside the textile machine, so as to inspect the front face (technical front) of the fabric.

In this regard, in a per se known manner, the digital video acquisition means can be coupled both to the structure of the textile machine and to a dedicated structure positioned outside the perimeter of the textile machine.

Furthermore, as mentioned, two mutually opposite digital still cameras could be provided, for inspecting both the front face and the rear face of the fabric.

Last but not least, although in the present description reference is made only to circular knitting machines, for which the method according to the invention is particularly advantageous, obviously it can also be applied to different types of textile machines, e.g., warp knitting machines, straight knitting machines, or weft and warp weaving frames.

The disclosures in Italian Patent Application No. 102024000000924 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for processing digital images of a fabric in output from a textile machine, comprising the step of sequentially acquiring digital images of an area (A) through which said fabric (F) transits by virtue of digital video acquisition means (12, 14, 16), **characterized in that** the method, in each acquired digital image, consists in:
- locating and classifying at least one of the yarns (Y1-Y7) forming the fabric (F) in said area (A) by virtue of processing means (18) based on at least one neural network, and
- in each one of said located and classified yarns (Y1-Y7), obtaining at least one geometric characteristic correlated to a significant parameter of interest of the fabric is obtained,
and **in that** it obtains information related to said significant parameter of interest on the basis of the trend of said at least one geometric characteristic in the sequence of acquired digital images.

2. The method according to claim 1, **characterized in that**, in each acquired digital image, all the yarns (Y1-Y7) of which the dimension transverse with respect to the direction in which the fabric transits is fully contained, are located.

3. The method according to claim 1 or 2, **characterized in that** said yarns are located and classified at the pixel level by means of a segmentation technique that generates a different segmentation mask (SM1-SM7) for each located and classified yarn (Y1, Y7), and said geometric characteristic is at least one in the group comprising area, perimeter, and ratio of area to perimeter of each generated segmentation mask.

4. The method according to claim 3, **characterized in that** said segmentation technique is an instance segmentation technique.

5. The method according to claim 3, **characterized in that** said segmentation technique is a panoptic image segmentation technique.

6. The method according to claim 1 or 2, **characterized in that** said yarns (Y1-Y7) are located and classified within a bounding box (D) that circumscribes the footprint of the respective yarn, and said geometric characteristic is the path of the yarn determined on the basis of the location of a group of key points (P1, P2, P3, ..., Pn) identified within said bounding box (D).

7. The method according to claim 6, **characterized in that** said yarns (Y1-Y7) are located and classified by a first neural network, and said key points (P1, P2, P3, ..., Pn) are identified by a second neural network.

8. The method according to claim 1, **characterized in that** said significant parameter of interest is fabric integrity and said information is the possible presence of a defect.

9. The method according to claim 1, **characterized in that** said significant parameter of interest is yarn consumption and said information is the trend of yarn consumption during the textile process.

10. The method according to claim 1 , **characterized in that** said significant parameter of interest is yarn tension and said information is the trend of yarn tension during the textile process.

11. The method according to claim 10, **characterized in that** said information related to the trend of yarn tension is used to generate a reference tension (T_ref) for use in closed-loop control of the tension with which the yarn is fed to said textile machine (104).

12. The method according to claim 1, **characterized in that** said significant parameter of interest is row length and said information is the trend of row length during the textile process.

13. The method according to claim 1, wherein the consecutive knots between the yarns forming the fabric vary their configuration with a periodic trend, **characterized in that** it:
- configures the parameters of said digital video acquisition means so that each digital image sent to said neural network covers an area of fabric containing exactly the pattern that repeats periodically, with the same configuration of yarns;
- synchronizes the acquisition of the digital images with the rotation speed of said textile machine so as to avoid gaps or overlaps between consecutive digital images.

14. The method according to claim 1, wherein the consecutive knots between the yarns forming the fabric vary their configuration with a periodic trend, **characterized in that** it:
- synchronizes the acquisition of the digital images with the rotation speed of said textile machine so as to avoid gaps or overlaps between consecutive digital images;
- acquires a sequence of digital images of a sample fabric, referred to a portion of the textile machine's revolution and preferably containing the entire pattern that is repeated periodically;
- derives a sequence of reference values from the sequence of digital images of said sample fabric;
- compares the sequences of actual values measured on the sequence of digital images acquired during the textile process with the sequence of reference values measured on said sample fabric;
- identifies the desired information on the basis of the difference detected, if any.

15. The method according to claim 1, **characterized in that** the step of locating and classifying at least one of the yarns (Y1-Y7) forming the fabric (F) in said area (A) is obtained as a direct output of said at least one neural network.

16. The method according to claim 1, **characterized in that** the position of each one of the located and classified yarns is plotted using an object tracking technique so as to identify and predict any changes in the position of the yarns in the sequence of images.

17. The method according to claim 1, wherein said textile machine is a circular knitting machine provided with a cylinder (C), said fabric (F) advancing from a forming point with a spiral motion around the axis of said cylinder (C) so as to form a tube of knitting, **characterized in that** said digital video acquisition means comprise a digital camera (12) placed in a stationary position proximate to said forming point of the fabric (F), said tube of knitting sliding in front of said digital camera (12) with a substantially horizontal continuous rotary motion.

18. The method according to claim 1, wherein said textile machine is a circular knitting machine provided with a cylinder, said fabric advancing from a forming point (P) with a spiral motion about the axis (Z) of said cylinder so as to form a tube of knitting (T), **characterized in that** said digital video acquisition means comprise a digital camera (1012) which rotates horizontally about the axis (Z) of said cylinder synchronously with said circular knitting machine, said tube of knitting (T) sliding in front of said digital camera (1012) with a vertical continuous straight motion.
